# EUROPEAN PATENT APPLICATION

(11) **EP 4 783 675 A1**
(43) Date of publication of application: **29.07.2026**
(21) Application number: 24868684.2
(22) Date of filing: 19.09.2024
(51) Int. Cl.: H04W 48/08, H04W 48/16, H04W 74/0833, H04W 72/21, H04W 24/10, H04L 5/00, H04W 84/06

(54) **METHOD AND APPARATUS FOR SEARCHING FOR AND ACCESSING CELL FOR SUPPORTING MULTIPLE COVERAGE**

(30) Priority: 19.09.2023 KR 20230124809
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR)
(74) Representative: Mooser, Sebastian Thomas
(86) International application number: PCT/KR2024/014125
(87) International publication number: WO 2025/063707

(57) **Abstract**

Proposed is an operation method that may be performed by a first device (100) in a wireless communication system. The method may comprise the steps of: acquiring information related to the first device (100); on the basis of the information related to the first device (100), determining a cell type to be accessed, the cell type including a first cell type and a second cell type, and a cell of the first cell type comprising a plurality of cells of the second cell type; and attempting random access to a first cell of the determined cell type to be accessed.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method may be proposed. For example, the method may comprise: obtaining information related to a first device; determining a cell type to access, based on the information related to the first device, wherein the cell type may include a first cell type and a second cell type, and wherein a cell of the first cell type may be composed of a plurality of cells of the second cell type; and attempting random access to a first cell of the determined cell type to access.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain information related to a first device; determine a cell type to access, based on the information related to the first device, wherein the cell type may include a first cell type and a second cell type, and wherein a cell of the first cell type may be composed of a plurality of cells of the second cell type; and attempt random access to a first cell of the determined cell type to access.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: obtain information related to a first device; determine a cell type to access, based on the information related to the first device, wherein the cell type may include a first cell type and a second cell type, and wherein a cell of the first cell type may be composed of a plurality of cells of the second cell type; and attempt random access to a first cell of the determined cell type to access.

According to an embodiment of the present disclosure, a non-transitory computer-readable storage medium storing instructions may be proposed. For example, the instructions, based on being executed, may cause a first device to: obtain information related to a first device; determine a cell type to access, based on the information related to the first device, wherein the cell type may include a first cell type and a second cell type, and wherein a cell of the first cell type may be composed of a plurality of cells of the second cell type; and attempt random access to a first cell of the determined cell type to access.

According to an embodiment of the present disclosure, a method may be proposed. For example, the method may comprise: transmitting, to a first device, resource information for random access. For example, the resource information may include information for a first random access resource related to a first cell type and information for a second random access resource related to a second cell type, a cell of the first cell type may be composed of a plurality of cells of the second cell type, a cell type to which the first device attempts an access may be determined among the first cell type and the second cell type, based on information related to the first device, and random access may be attempted by the first device to a first cell of the determined cell type to which the first device attempts the access.

According to an embodiment of the present disclosure, a base station may be proposed. For example, the base station may comprise: at least one transceiver; at least one processor; and at least one memory connected to the at least one processor and storing instructions. For example, the instructions, based on being executed by the at least one processor, may cause the base station to: transmit, to a first device, resource information for random access, wherein the resource information may include information for a first random access resource related to a first cell type and information for a second random access resource related to a second cell type, wherein a cell of the first cell type may be composed of a plurality of cells of the second cell type, wherein a cell type to which the first device attempts an access may be determined among the first cell type and the second cell type, based on information related to the first device, and wherein random access may be attempted by the first device to a first cell of the determined cell type to which the first device attempts the access.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a synchronization source or a synchronization reference of V2X according to an embodiment of the present disclosure.
FIG. 10 shows synchronization signals transmitted separately per cell coverage according to an embodiment of the present disclosure.
FIG. 11 shows a UE having high mobility, such as an unmanned aerial vehicle (e.g., UAV) UE, that attempts cell search and access for a first type cell according to an embodiment of the present disclosure.
FIG. 12 shows a UE having low mobility, such as a pedestrian UE, that attempts cell search and access for a second type cell according to an embodiment of the present disclosure.
FIG. 13 shows second type cells activated and deactivated according to a movement path of a UE according to an embodiment of the present disclosure.
FIG. 14 and FIG. 15 show a UE that transmits a reference signal for a second type cell associated with a first type cell according to an embodiment of the present disclosure.
FIG. 16 shows a procedure that may be performed by a first device according to an embodiment of the present disclosure.
FIG. 17 shows a communication system 1, based on an embodiment of the present disclosure.
FIG. 18 shows wireless devices, based on an embodiment of the present disclosure.
FIG. 19 shows a signal process circuit for a transmission signal, based on an embodiment of the present disclosure.
FIG. 20 shows another example of a wireless device, based on an embodiment of the present disclosure.
FIG. 21 shows a hand-held device, based on an embodiment of the present disclosure.
FIG. 22 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

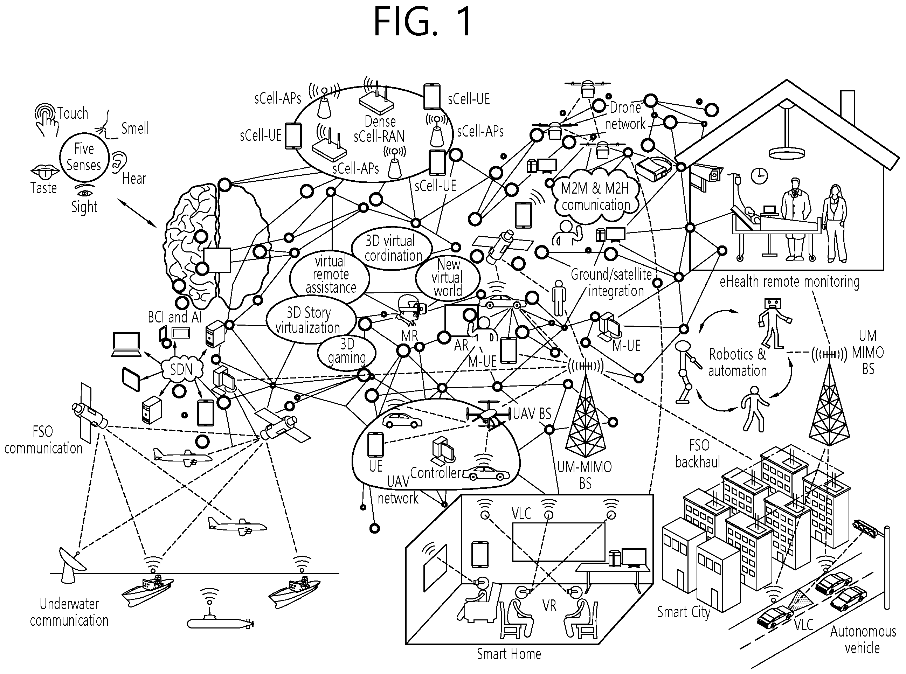

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

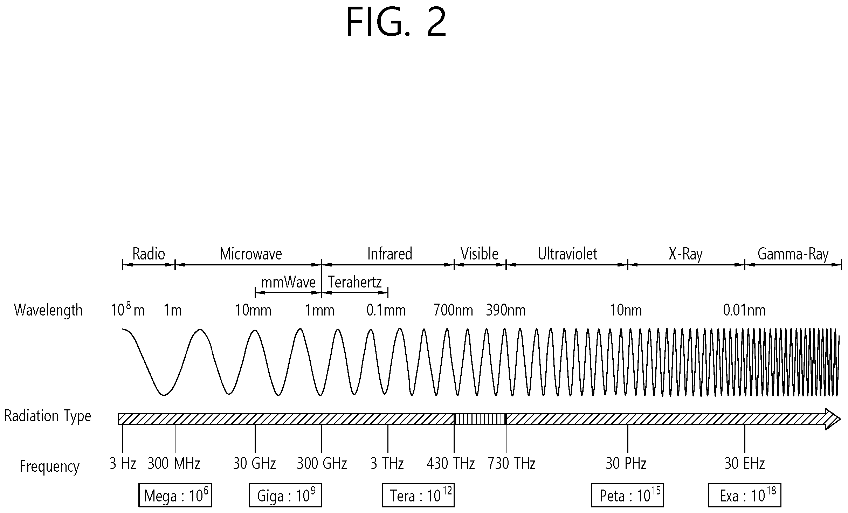

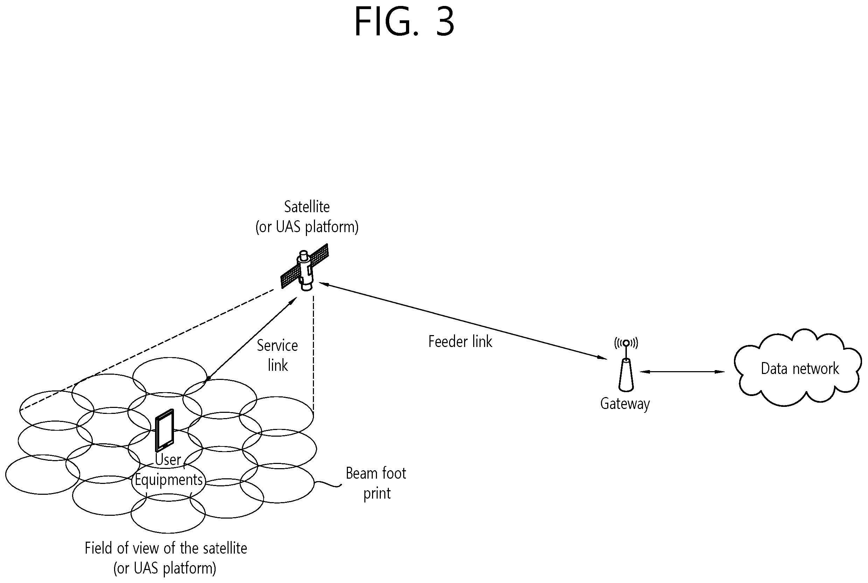

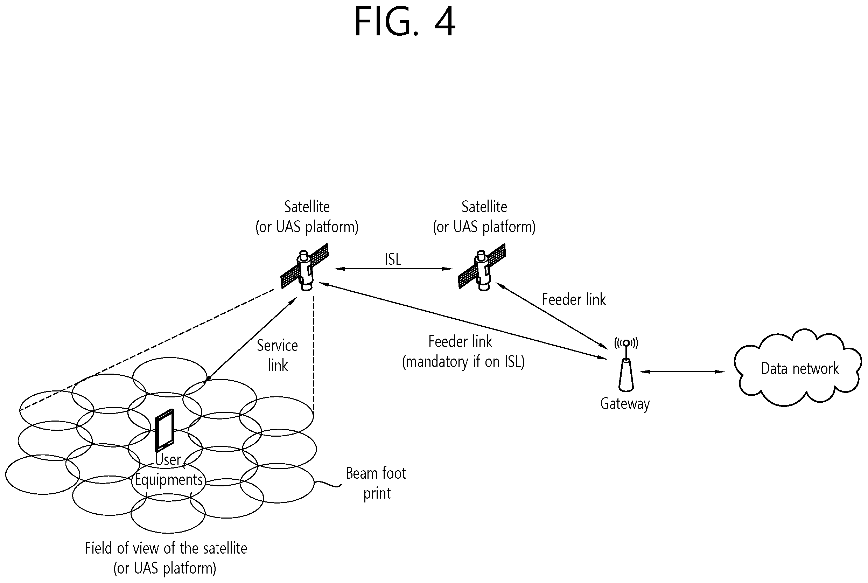

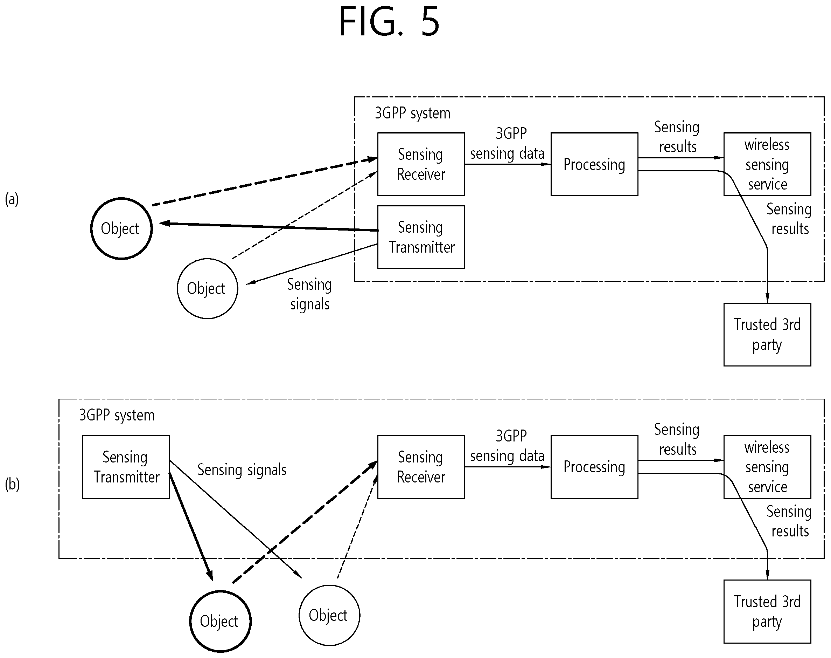

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC _CONNECTED state, and, otherwise, the UE may be in an RRC_IDLE state. In case of the NR, an RRC _INACTIVE state is additionally defined, and a UE being in the RRC _INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

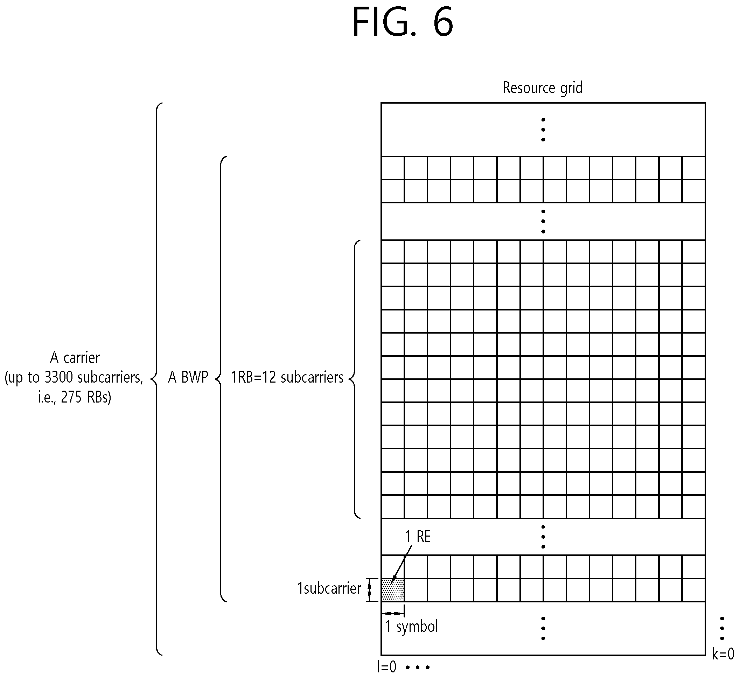

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

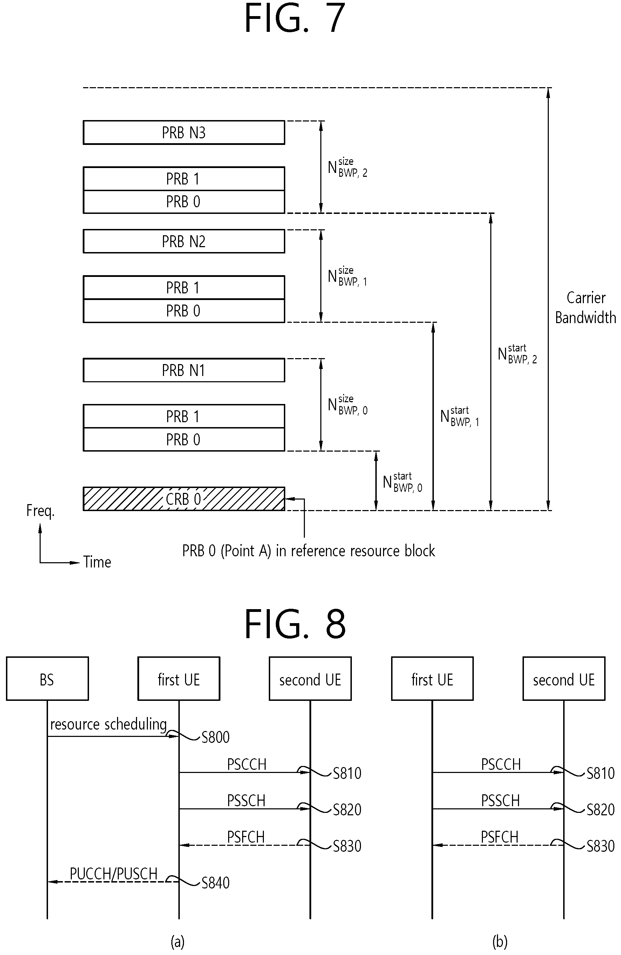

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in a step S830, a first UE may receive a PSFCH. For example, a first UE and a second UE may determine a PSFCH resource, and a second UE may transmit HARQ feedback to a first UE using a PSFCH resource.

Referring to (a) of FIG. 8, in a step S840, a first UE may transmit SL HARQ feedback to a base station through a PUCCH and/or a PUSCH.

Hereinafter, obtaining synchronization of an SL UE will be described.

In a time division multiple access (TDMA) system and a frequency division multiple access (FDMA) system, accurate time synchronization and frequency synchronization are essential. If time synchronization and frequency synchronization are not accurately achieved, system performance may be degraded due to inter-symbol interference (ISI) and inter-carrier interference (ICI). The same applies to vehicle-to-everything (V2X). In V2X, for time/frequency synchronization, a sidelink synchronization signal (SLSS) may be used in a physical layer, and a master information block-sidelink-V2X (MIB-SL-V2X) may be used in a radio link control (RLC) layer.

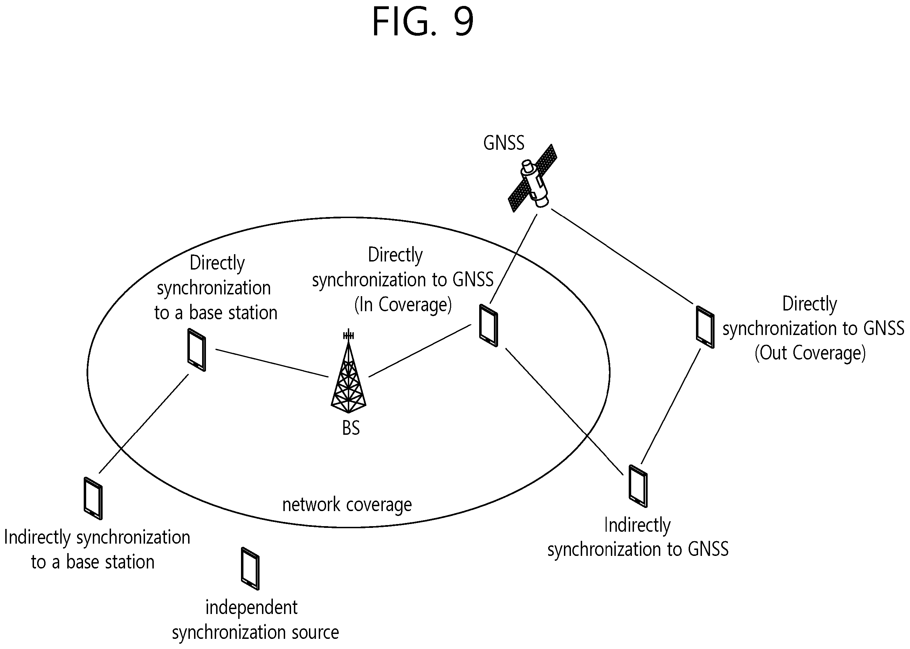

FIG. 9 shows a synchronization source or a synchronization reference of V2X according to an embodiment of the present disclosure. The embodiment of FIG. 9 may be combined with various embodiments of the present disclosure.

Referring to FIG. 9, in V2X, a UE may be directly synchronized to a global navigation satellite system (GNSS), or may be indirectly synchronized to a GNSS through a UE (within network coverage or outside network coverage) that is directly synchronized to the GNSS. When a GNSS is configured as a synchronization source, a UE may calculate a direct frame number (DFN) and a subframe number using coordinated universal time (UTC) and a (pre-)configured DFN offset.

Alternatively, a UE may be directly synchronized to a base station, or may be synchronized to another UE that is time/frequency synchronized to a base station. For example, the base station may be an eNB or a gNB. For example, when a UE is within network coverage, the UE may receive synchronization information provided by the base station and may be directly synchronized to the base station. Thereafter, the UE may provide synchronization information to another adjacent UE. When base station timing is configured as a synchronization reference, the UE may follow a cell associated with the frequency (when within cell coverage at the frequency), or a primary cell or a serving cell (when outside cell coverage at the frequency), for synchronization and downlink measurement.

A base station (for example, a serving cell) may provide a synchronization configuration for a carrier used for V2X or SL communication. In this case, a UE may follow a synchronization configuration received from the base station. If a UE does not detect any cell on the carrier used for the V2X or SL communication and does not receive a synchronization configuration from a serving cell, the UE may follow a preconfigured synchronization configuration.

Alternatively, a UE may be synchronized to another UE that does not obtain synchronization information directly or indirectly from a base station or GNSS. A synchronization source and a preference may be preconfigured for a UE. Alternatively, a synchronization source and a preference may be configured through a control message provided by a base station.

An SL synchronization source may be associated with a synchronization priority. For example, a relationship between a synchronization source and a synchronization priority may be defined as shown in Table 3 or Table 4 below. Table 3 or Table 4 is merely an example, and a relationship between a synchronization source and a synchronization priority may be defined in various forms.

**[Table 3]**

| priority level | GNSS-based synchronization | eNB/gNB-based synchronization |
|---|---|---|
| P0 | GNSS | base station |
| P1 | all UEs directly synchronized to GNSS | all UEs directly synchronized to base station |
| P2 | all UEs indirectly synchronized to GNSS | all UEs indirectly synchronized to base station |
| P3 | all other UEs | GNSS |
| P4 | N/A | all UEs directly synchronized to GNSS |
| P5 | N/A | all UEs indirectly synchronized to GNSS |
| P6 | N/A | all other UEs |

**[Table 4]**

| priority level | GNSS-based synchronization | eNB/gNB-based synchronization |
|---|---|---|
| P0 | GNSS | base station |
| P1 | all UEs directly synchronized to GNSS | all UEs directly synchronized to base station |
| P2 | all UEs indirectly synchronized to GNSS | all UEs indirectly synchronized to base station |
| P3 | base station | GNSS |
| P4 | all UEs directly synchronized to base station | all UEs directly synchronized to GNSS |
| P5 | all UEs indirectly synchronized to base station | all UEs indirectly synchronized to GNSS |
| P6 | remaining UE(s) with lower priority | remaining UE(s) with lower priority |

In Table 3 or Table 4, P0 may indicate a highest priority, and P6 may indicate a lowest priority. In Table 3 or Table 4, a base station may include at least one of a gNB or an eNB.

Whether to use GNSS-based synchronization or base station-based synchronization may be (pre-)configured. In a single-carrier operation, a UE may derive transmission timing of the UE from an available synchronization reference having the highest priority.

Meanwhile, each SLSS may have an SL synchronization identifier (Sidelink Synchronization Identifier, SLSS ID).

For example, in LTE SL or LTE V2X, a value of an SLSS ID may be defined based on a combination of two different S-PSS sequences and 168 different S-SSS sequences. For example, a number of SLSS IDs may be 336. For example, a value of an SLSS ID may be one of 0 to 335.

For example, in NR SL or NR V2X, a value of an SLSS ID may be defined based on a combination of two different S-PSS sequences and 336 different S-SSS sequences. For example, a number of SLSS IDs may be 672. For example, a value of an SLSS ID may be one of 0 to 671. For example, among two different S-PSSs, one S-PSS may be associated with in-coverage, and a remaining S-PSS may be associated with out-of-coverage. For example, SLSS IDs of 0 to 335 may be used in in-coverage, and SLSS IDs of 336 to 671 may be used in out-of-coverage.

As technologies related to an unmanned aerial vehicle (e.g., UAV; unmanned aerial vehicle) and/or a drone are rapidly developing, research on utilizing an unmanned aerial vehicle (e.g., UAV) as a communication node in a wireless communication system is actively conducted in the field of wireless communication. For example, in the following description, a drone and an unmanned aerial vehicle (e.g., UAV) may be replaced with/substituted for each other. In addition, for example, in the following description, an unmanned aerial vehicle (e.g., UAV) may be replaced with/substituted for an unmanned aerial vehicle UE.

For example, an unmanned aerial vehicle (e.g., UAV) may serve as a relay node providing a communication service in a wireless communication system and/or as a UE node receiving a communication service in the wireless communication system. Here, the unmanned aerial vehicle (e.g., UAV) UE may have characteristics such as movement in a three-dimensional space, a flexible trajectory, and/or a high speed, etc. and may have mobility that is clearly distinguished from mobility of a conventional terrestrial UE (e.g., a pedestrian UE, a vehicle, etc.). Accordingly, a base station and/or a cell in a next-generation wireless communication system may need to evolve to support both a UE having low mobility and a UE having high mobility. Accordingly, in the present disclosure, a method and a device for supporting a first type cell corresponding to a first coverage and/or a second type cell corresponding to a second coverage in a wireless communication system are proposed. Hereinafter, in the present disclosure, a method for supporting two coverages is mainly described, but proposals of the present disclosure may be extended to a case of supporting two or more arbitrary coverages. Hereinafter, for example, corresponding to a coverage may mean serving the coverage.

### [Proposal #01]

According to an embodiment of the present disclosure, a method for supporting a first type cell corresponding to a first coverage and/or a second type cell corresponding to a second coverage in a wireless communication system may be provided. Here, for example, a base station may transmit a first synchronization signal including (full) identifier information for a first type cell and/or a second synchronization signal including (full and/or partial) identifier information for a second type cell. For example, the first synchronization signal may be a primary synchronization signal (e.g., PSS). For example, the second synchronization signal may be a secondary synchronization signal (e.g., SSS).

For example, the first type cell may mean a cell composed of a plurality of second type cell(s). For example, hereinafter, a plurality of second type cell(s) may be replaced with/substituted for at least one second type cell. For example, hereinafter, a first type cell may mean a cell of a first cell type, and a second type cell may mean a cell of a second cell type.

Here, (full) identifier information for the second type cell may be indicated by a second synchronization signal alone or may be indicated by using both a first synchronization signal and a second synchronization signal. For example, a second synchronization signal may indicate second type cell identifier information within a first type cell, and full second type cell identifier information may be obtained by combining the information with first type cell identifier information indicated by a first synchronization signal.

Here, the first synchronization signal may be transmitted using a resource distinguished on a per first type cell basis. For example, the first synchronization signal may be transmitted based on a different resource for each cell of a first cell type. For example, the first synchronization signal may have a form in which an identical resource is transmitted from second type cell(s) constituting a first type cell in a single frequency network (e.g., SFN; single frequency network) manner. For example, the first synchronization signal may be transmitted in a form in which an identical resource is transmitted from second type cell(s) constituting a first type cell in a single frequency network (e.g., SFN) manner. Here, a second synchronization signal may be transmitted using a resource distinguished on a per second type cell basis. For example, the second synchronization signal may be transmitted based on a different resource for each cell of a second cell type.

Here, the first synchronization signal and a second synchronization signal may be distinguished in a time domain and/or a frequency domain and/or a code domain.

In a next-generation communication system according to an embodiment of the present disclosure, assuming that a first type cell corresponding to a first coverage and/or a second type cell corresponding to a second coverage is supported, the first type cell may be a cell composed of a plurality of second type cell(s). For example, the first type cell may mean a cell having a wide coverage for serving unmanned aerial vehicle (e.g., UAV) UE(s) having relatively high mobility, and the second type cell may mean a cell having a narrow coverage for serving pedestrian UE(s) having relatively low mobility.

Here, for example, when a UE searches for a cell using a synchronization signal, a synchronization signal distinguished per coverage may be required in order to support both the first type cell and the second type cell.

For example, a base station may transmit a first synchronization signal including (full) identifier information for a first type cell and/or a second synchronization signal including (full and/or partial) identifier information for a second type cell.

Here, (full) identifier information for the second type cell may be indicated by a second synchronization signal alone or may be indicated by using both a first synchronization signal and a second synchronization signal. For example, a second synchronization signal may indicate second type cell identifier information within a first type cell, and full second type cell identifier information may be obtained by combining the information with first type cell identifier information indicated by a first synchronization signal. According to the above-described proposed operation of the present disclosure, a base station may provide synchronization signals distinguished per coverage, and a UE may perform a cell search procedure for a suitable cell type by using a synchronization signal corresponding to mobility of the UE.

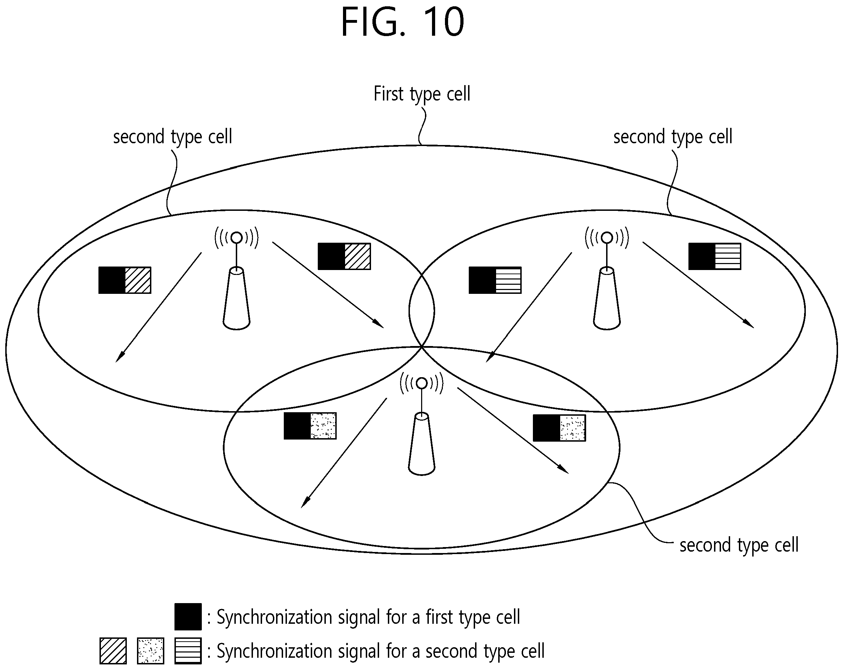

FIG. 10 shows synchronization signals transmitted separately per cell coverage according to an embodiment of the present disclosure. The embodiment of FIG. 10 may be combined with various embodiments of the present disclosure.

Referring to FIG. 10, a base station may transmit, for two cell types supporting different coverages (for example, a first type cell and a second type cell), synchronization signals suitable for each cell type. For example, when three second type cells (a second cell, a third cell, and a fourth cell) are included in a first type cell (a first cell), assuming that the three second type cells are served by a first base station, a second base station, and a third base station, respectively, a first base station may transmit both a synchronization signal related to the first cell and a synchronization signal related to the second cell, a second base station may transmit both a synchronization signal related to the first cell and a synchronization signal related to the third cell, and a third base station may transmit both a synchronization signal related to the first cell and a synchronization signal related to the fourth cell.

The above [Proposal #01] may be applied in combination with other proposal(s) within a range in which operations of the disclosure do not conflict.

### [Proposal #02]

According to an embodiment of the present disclosure, in a method for supporting a first type cell corresponding to a first coverage and/or a second type cell corresponding to a second coverage in a wireless communication system, a method may be provided in which a base station informs, through system information, a random access resource for a first type cell (hereinafter, a first random access resource) and a random access resource for a second type cell (hereinafter, a second random access resource) by distinguishing between them.

Here, the first type cell may mean a cell composed of a plurality of second type cell(s).

Here, when the base station does not support a first type cell (or a second type cell), a first random access resource (or a second random access resource) may not be configured.

Here, for example, the first random access resource and a second random access resource may be distinguished in a time domain and/or a frequency domain and/or a code domain.

Here, the random access resource may have a (partial) correspondence relationship with a synchronization signal resource. That is, for example, the first random access resource may have a (partial) correspondence relationship with a synchronization signal resource used in a first type cell, and/or the second random access resource may have a (partial) correspondence relationship with a synchronization signal resource used in a second type cell.

In a next-generation communication system according to an embodiment of the present disclosure, assuming that a first type cell corresponding to a first coverage and/or a second type cell corresponding to a second coverage is supported, the first type cell may be a cell composed of a plurality of second type cell(s). For example, the first type cell may mean a cell having a wide coverage for serving unmanned aerial vehicle (e.g., UAV) UE(s) having relatively high mobility, and the second type cell may mean a cell having a narrow coverage for serving pedestrian UE(s) having relatively low mobility.

Here, for example, when a UE accesses a cell through a (random) access resource, a (random) access resource distinguished per coverage may be required in order to support both the first type cell and the second type cell. For example, a base station may separately inform, through system information, a random access resource for a first type cell (hereinafter, a first random access resource) and a random access resource for a second type cell (hereinafter, a second random access resource) by distinguishing between them.

Here, when the base station does not support a first type cell (or a second type cell), a first random access resource (or a second random access resource) may not be configured. Here, the first random access resource and a second random access resource may be distinguished in a time domain and/or a frequency domain and/or a code domain.

For example, a random access channel (e.g., RACH; random access channel) preamble resource used by unmanned aerial vehicle (e.g., UAV) UE(s) and pedestrian UE(s) may have identical time and frequency resources but may be distinguished by different sequences. That is, for example, time and frequency resources of a random access channel (e.g., RACH; random access channel) preamble resource used in a first type cell and a random access channel (e.g., RACH; random access channel) preamble resource used in a second type cell may be identical, but the two resources may be distinguished based on different sequences.

According to the above-described proposed operation of the present disclosure, a base station may provide random access resources distinguished per coverage, and a UE may attempt cell access for a suitable cell type by using a random access resource corresponding to mobility of the UE. In addition, a base station may obtain coverage information to be provided to a UE that has accessed through a distinguished random access resource, and may separately manage UE lists per coverage.

The above [Proposal #02] may be applied in combination with other proposal(s) within a range in which operations of the disclosure do not conflict.

### [Proposal #03]

According to an embodiment of the present disclosure, in a method for supporting a first type cell corresponding to a first coverage and/or a second type cell corresponding to a second coverage, a method may be provided in which a UE selectively performs one of the following cell search and/or random access procedures according to UE capability and/or UE mobility.
(1) A cell search and/or random access procedure based on a first type cell identifier.
(2) A cell search and/or random access procedure based on a second type cell identifier.

Here, the first type cell may mean a cell composed of a plurality of second type cell(s).

Here, the UE may obtain first type cell identifier information and/or second type cell identifier information through synchronization signal detection.

In a next-generation communication system according to an embodiment of the present disclosure, assuming that a first type cell corresponding to a first coverage and/or a second type cell corresponding to a second coverage is supported, the first type cell may be a cell composed of a plurality of second type cell(s). For example, the first type cell may mean a cell having a wide coverage for serving unmanned aerial vehicle (e.g., UAV) UE(s) having relatively high mobility, and the second type cell may mean a cell having a narrow coverage for serving pedestrian UE(s) having relatively low mobility.

Here, when synchronization signals and/or (random) access resources distinguished per coverage and/or per cell type are provided according to other proposal(s) of the present disclosure, a UE may select a suitable coverage and/or cell type according to capability and/or mobility of the UE, and may perform a cell search and/or a random access procedure by using a synchronization signal and/or a (random) access resource corresponding thereto. According to the above proposal(s) of the present disclosure, a UE may perform a cell search and/or a cell access procedure supporting mobility of the UE.

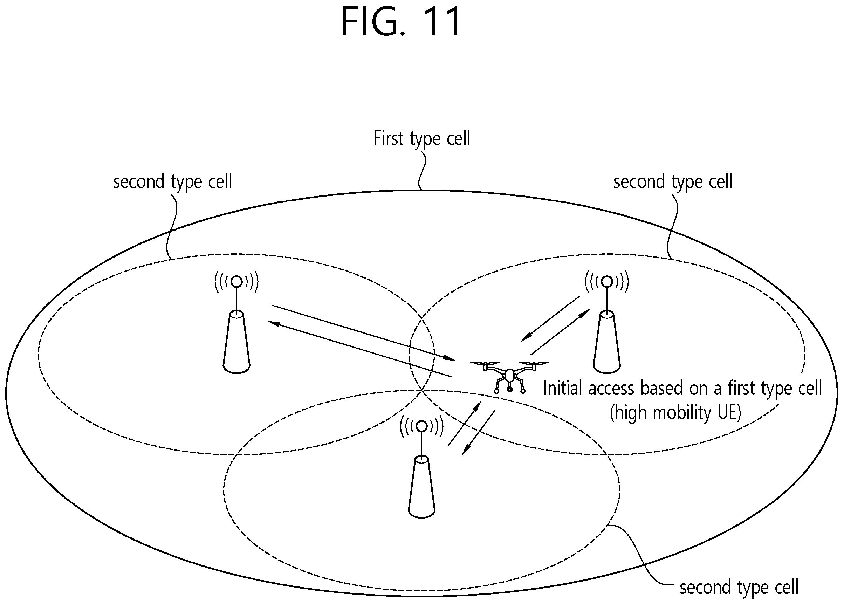

FIG. 11 shows a UE having high mobility, such as an unmanned aerial vehicle (e.g., UAV) UE, that attempts cell search and access for a first type cell according to an embodiment of the present disclosure. The embodiment of FIG. 11 may be combined with various embodiments of the present disclosure.

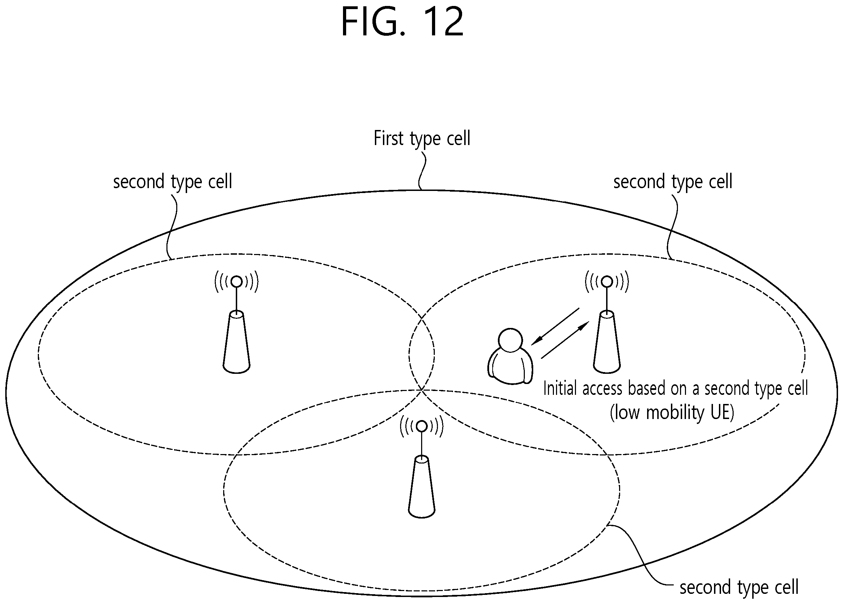

FIG. 12 shows a UE having low mobility, such as a pedestrian UE, that attempts cell search and access for a second type cell according to an embodiment of the present disclosure. The embodiment of FIG. 12 may be combined with various embodiments of the present disclosure.

Referring to FIG. 11 and FIG. 12, an example of cell type search and access according to UE mobility is shown. For example, a UE having high mobility, such as an unmanned aerial vehicle (e.g., UAV) UE, may attempt cell search and access for a first type cell, and a UE having low mobility, such as a pedestrian UE, may attempt cell search and access for a second type cell.

The above [Proposal #03] may be applied in combination with other proposal(s) within a range in which operations of the disclosure do not conflict.

### [Proposal #04]

According to an embodiment of the present disclosure, in a method for supporting a first type cell corresponding to a first coverage and/or a second type cell corresponding to a second coverage, a method may be provided in which a base station provides, to a UE (that has accessed a first type cell), a first type cell-based transmission configuration and/or a second type cell-based transmission configuration (associated with the first type cell).

Here, the first type cell may mean a cell composed of a plurality of second type cell(s).

Here, for example, a resource region according to the first type cell-based transmission configuration and a resource region according to a second type cell-based transmission configuration may be configured to be identical or different. For example, the resource region according to the first type cell-based transmission configuration and the resource region according to the second type cell-based transmission configuration may be configured to be identical, partially overlapped, or completely different. For example, the resource region according to the first type cell-based transmission configuration and the resource region according to the second type cell-based transmission configuration may be configured as different partial bandwidths (e.g., BWP; bandwidth part). For example, the resource region according to the first type cell-based transmission configuration and the resource region according to the second type cell-based transmission configuration may be configured to be included in different partial bandwidths (e.g., BWP; bandwidth part).

In a next-generation communication system according to an embodiment of the present disclosure, assuming that a first type cell corresponding to a first coverage and/or a second type cell corresponding to a second coverage is supported, the first type cell may be a cell composed of a plurality of second type cell(s). For example, the first type cell may mean a cell having a wide coverage for serving unmanned aerial vehicle (e.g., UAV) UE(s) having relatively high mobility, and the second type cell may mean a cell having a narrow coverage for serving pedestrian UE(s) having relatively low mobility.

Here, for example, an unmanned aerial vehicle (e.g., UAV) UE may access the first type cell, and connectivity may be guaranteed within a wide coverage. Here, when the base station supports only the first type cell-based transmission for the unmanned aerial vehicle (e.g., UAV) UE, a problem may occur in which reuse of radio resources decreases and resources are used inefficiently. Accordingly, in the present disclosure, a method is provided in which a base station provides, to a UE (that has accessed a first type cell), a first type cell-based transmission configuration and/or a second type cell-based transmission configuration (associated with the first type cell).

For example, a base station may transmit first type cell-based transmission configuration information to an unmanned aerial vehicle (e.g., UAV) UE. For example, a base station may provide, to an unmanned aerial vehicle (e.g., UAV) UE, second type cell(s)(constituting the first type cell)-based transmission configuration information, in addition to the first type cell-based transmission configuration information. The second type cell-based transmission configuration may be used for performing second type cell-based transmission in the future. According to the above proposal of the present disclosure, a UE may have connectivity to both a first type cell and a second type cell, and both stable mobility based on the first type cell and efficient data transmission and reception based on the second type cell may be supported.

The above [Proposal #04] may be applied in combination with other proposal(s) within a range in which operations of the disclosure do not conflict.

### [Proposal #05]

According to an embodiment of the present disclosure, in a method for supporting a first type cell corresponding to a first coverage and/or a second type cell corresponding to a second coverage, a method may be provided in which a base station activates and/or deactivates, for a specific physical channel, a specific second type cell (associated with the first type cell) (within the first type cell) for a UE (that has accessed a first type cell), and configures/indicates transmission and/or reception for the specific physical channel to be performed within the activated second type cell (or not to be performed within the deactivated second type cell). For example, the specific physical channel (or a physical channel) may include an inter-UE physical channel (e.g., PSCCH, PSSCH, PSFCH, etc.).

Here, the first type cell may mean a cell composed of a plurality of second type cell(s).

Here, for example, whether a specific second type cell (associated with the first type cell) is activated and/or deactivated may be applied differently (or independently) per physical channel.

Here, for example, when there is no second type cell (associated with the first type cell) activated for a specific physical channel, the UE may perform transmission and/or reception operation for the corresponding physical channel according to a first type cell-based transmission configuration.

Here, for example, the base station may provide information for second type cell(s) activated according to a location and/or a path of a UE. Here, a UE may report, in advance, information for a location and/or a path of the UE to the base station.

Here, for example, an activation/deactivation message for the second type cell may be transmitted according to a first type cell-based transmission configuration.

In a next-generation communication system according to an embodiment of the present disclosure, assuming that a first type cell corresponding to a first coverage and/or a second type cell corresponding to a second coverage is supported, the first type cell may be a cell composed of a plurality of second type cell(s). For example, the first type cell may mean a cell having a wide coverage for serving unmanned aerial vehicle (e.g., UAV) UE(s) having relatively high mobility, and the second type cell may mean a cell having a narrow coverage for serving pedestrian UE(s) having relatively low mobility.

Here, for example, for a purpose of obtaining stability of flight and efficiency of radio resources, the base station may provide both a first type cell-based service and/or a second type cell-based service (associated with the first type cell) to the unmanned aerial vehicle (e.g., UAV) UE.

Here, a base station may activate and/or deactivate, for a specific physical channel, a specific second type cell (associated with a first type cell) for a UE (that has accessed a first type cell), and may configure/indicate transmission and/or reception for the specific physical channel to be performed within the activated second type cell (or not to be performed within the deactivated second type cell).

Here, for example, when a UE reports a movement path of the UE to a base station in advance and/or when the base station can predict the movement path of the UE, the base station may provide (to the UE) information for second type cell(s) activated according to a location and/or a path of the UE. Here, the UE may perform the physical channel transmission according to a transmission configuration corresponding to the activated second type cell.

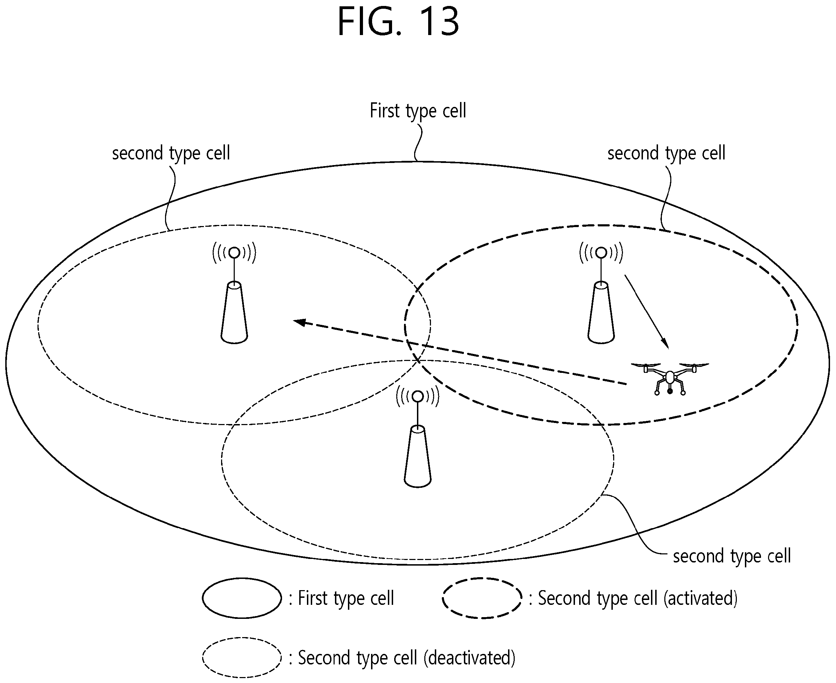

FIG. 13 shows second type cells activated and deactivated according to a movement path of a UE according to an embodiment of the present disclosure. The embodiment of FIG. 13 may be combined with various embodiments of the present disclosure.

Referring to FIG. 13, when a first type cell is composed of a plurality of second type cell(s), a specific second type cell within the first type cell may be activated according to a movement path of an unmanned aerial vehicle (e.g., UAV) UE, and the unmanned aerial vehicle (e.g., UAV) UE may receive a service through the activated cell.

The above [Proposal #05] may be applied in combination with other proposal(s) within a range in which operations of the disclosure do not conflict.

### [Proposal #06]

According to an embodiment of the present disclosure, in a method for supporting a first type cell corresponding to a first coverage and/or a second type cell corresponding to a second coverage, a method may be provided in which a base station (separately) configures/indicates, to a UE (that has accessed a first type cell), a first service to communicate via a first type cell and a second service to communicate via a second type cell.

Here, the first type cell may mean a cell composed of a plurality of second type cell(s).

Here, the first service may include flight control information of an unmanned aerial vehicle (e.g., UAV) UE.

In a next-generation communication system according to an embodiment of the present disclosure, assuming that a first type cell corresponding to a first coverage and/or a second type cell corresponding to a second coverage is supported, the first type cell may be a cell composed of a plurality of second type cell(s). For example, the first type cell may mean a cell having a wide coverage for serving unmanned aerial vehicle (e.g., UAV) UE(s) having relatively high mobility, and the second type cell may mean a cell having a narrow coverage for serving pedestrian UE(s) having relatively low mobility.

Here, for example, for a purpose of obtaining stability of flight and efficiency of radio resources, the base station may provide both a first type cell-based service and/or a second type cell-based service (associated with the first type cell) to the unmanned aerial vehicle (e.g., UAV) UE. Specifically, for example, a service for flight control information of the unmanned aerial vehicle (e.g., UAV) UE (for example, C2 mode in 3GPP) may be supported based on a first type cell, and an unmanned aerial vehicle (e.g., UAV) UE-based application service (for example, photo and/or video streaming, etc.) may be supported based on a second type cell. For example, a service for flight control information of the unmanned aerial vehicle (e.g., UAV) UE (for example, C2 mode in 3GPP) may be serviced in a first type cell, and an unmanned aerial vehicle (e.g., UAV) UE-based application service (for example, photo and/or video streaming, etc.) may be serviced in a second type cell.

The above [Proposal #06] may be applied in combination with other proposal(s) within a range in which operations of the disclosure do not conflict.

### [Proposal #07]

According to an embodiment of the present disclosure, in a method for supporting a first type cell corresponding to a first coverage and/or a second type cell corresponding to a second coverage, a method may be provided in which a base station transmits, to a UE (that has accessed a first type cell), a trigger signal according to a first type cell-based transmission configuration, and the UE performs one or more of the following operations upon reception of the trigger signal.
(1) transmission of a reference signal and/or a control channel for first type cell-targeted UE-to-base station communication (e.g., UL communication).
   For example, a UE may perform transmission of a reference signal and/or a control channel for first type cell-targeted UE-to-base station communication (e.g., UL communication). Here, a base station may measure and/or receive a report of reception strength per second type cell through the UE-to-base station communication (e.g., UL communication) reference signal and/or control channel, and may determine second type cell(s) (associated with a first type cell) to be activated and/or deactivated for the UE. Here, transmission of the UE-to-base station communication (e.g., UL communication) reference signal and/or control channel may follow a first type cell-based transmission configuration.
(2) transmission of a reference signal and/or a control channel for second type cell-targeted UE-to-base station communication (e.g., UL communication) (associated with a first type cell).

For example, a UE may perform transmission of a UE-to-base station communication (e.g., UL communication) reference signal and/or a control channel targeting a specific second type cell among second type cell(s) (associated with a first type cell). Here, the specific second type cell may be a second type cell that the UE intends to activate and/or deactivate. Here, a base station may detect the specific second type cell through the UE-to-base station communication (e.g., UL communication) reference signal and/or control channel, and may determine second type cell(s) (associated with the first type cell) to be activated and/or deactivated for the UE. Here, transmission of the UE-to-base station communication (e.g., UL communication) reference signal and/or control channel may follow a second type cell-based transmission configuration.

Here, the UE-to-base station communication (e.g., UL communication) reference signal may be transmitted in a form in which a (same) signal is repeatedly transmitted in a time domain and/or a frequency domain.

Here, the control channel may be a channel for reporting a measurement result for second type cell(s) (associated with a first type cell).

In a next-generation communication system according to an embodiment of the present disclosure, assuming that a first type cell corresponding to a first coverage and/or a second type cell corresponding to a second coverage is supported, the first type cell may be a cell composed of a plurality of second type cell(s). For example, the first type cell may mean a cell having a wide coverage for serving unmanned aerial vehicle (e.g., UAV) UE(s) having relatively high mobility, and the second type cell may mean a cell having a narrow coverage for serving pedestrian UE(s) having relatively low mobility.

Here, for example, for a purpose of obtaining stability of flight and efficiency of radio resources, the base station may provide both a first type cell-based service and/or a second type cell-based service (associated with a first type cell) to the unmanned aerial vehicle (e.g., UAV) UE. For example, the base station may activate second type cell(s) that guarantee link quality equal to or higher than a certain level for the UE, and may provide a service based on the cell(s).

Here, in order for a base station to determine second type cell(s) (associated with a first type cell) to be activated and/or deactivated for the UE, the base station needs to obtain information for link quality between the UE and the second type cell(s). Accordingly, in the present disclosure, a method is proposed in which a base station transmits, to a UE (that has accessed a first type cell), a trigger signal according to a first type cell-based transmission configuration, and the UE transmits a UE-to-base station communication (e.g., UL communication) reference signal and/or a control channel upon reception of the trigger signal.

Here, for example, the UE may transmit the UE-to-base station communication (e.g., UL communication) reference signal and/or control channel targeting a first type cell. For example, a UE may perform transmission of a UE-to-base station communication (e.g., UL communication) reference signal and/or a control channel for first type cell-targeted communication. Here, a base station may measure and/or receive a report of reception strength per second type cell through the UE-to-base station communication (e.g., UL communication) reference signal and/or control channel, and may determine second type cell(s) (associated with a first type cell) to be activated and/or deactivated for the UE based on the corresponding information. Here, transmission of the UE-to-base station communication (e.g., UL communication) reference signal and/or control channel may follow a first type cell-based transmission configuration.

As a method different from the above, for example, the UE may transmit the UE-to-base station communication (e.g., UL communication) reference signal and/or control channel targeting a second type cell. For example, a UE may perform transmission of a UE-to-base station communication (e.g., UL communication) reference signal and/or a control channel targeting a specific second type cell among second type cell(s) (associated with a first type cell). Here, the specific second type cell may be a second type cell that the UE intends to activate and/or deactivate. Here, a base station may detect the specific second type cell through the UE-to-base station communication (e.g., UL communication) reference signal and/or control channel, and may determine second type cell(s) (associated with the first type cell) to be activated and/or deactivated for the UE based on the corresponding information. Here, the UE-to-base station communication (e.g., UL communication) reference signal and/or control channel may follow a second type cell-based transmission configuration.

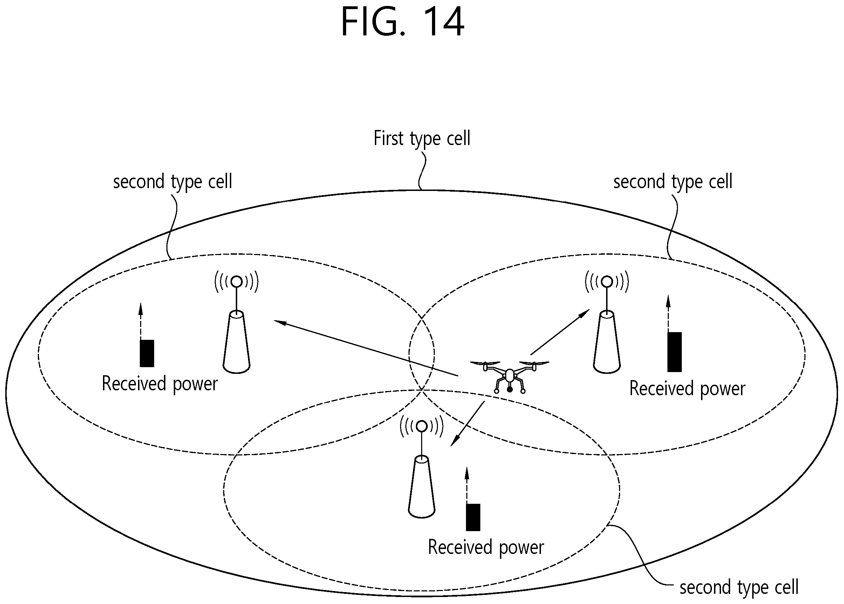

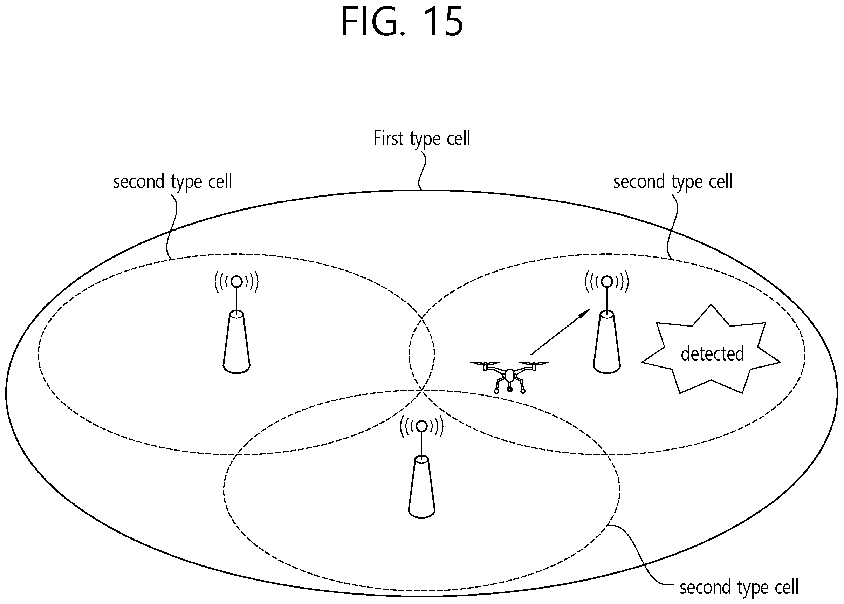

FIG. 14 and FIG. 15 show a UE that transmits a reference signal for a second type cell associated with a first type cell according to an embodiment of the present disclosure. The embodiments of FIG. 14 and FIG. 15 may be combined with various embodiments of the present disclosure.

FIG. 14 and FIG. 15 illustrate operations according to the proposal of the present disclosure. When a first type cell is composed of a plurality of second type cells and a UE has accessed a first type cell, the UE may transmit a UE-to-base station communication (e.g., UL communication) reference signal and/or a control channel for supporting activation/deactivation determination for a second type cell (within the first type cell) of the base station. Here, for example, the UE may assist a second type cell selection operation of the base station (for the UE) by transmitting the UE-to-base station communication (e.g., UL communication) reference signal and/or control channel targeting the first type cell, or after directly selecting a second type cell, may transmit the UE-to-base station communication (e.g., UL communication) reference signal and/or control channel targeting the selected second type cell.

Referring to FIG. 14, a UE receiving a service from a first type cell may transmit a reference signal to a plurality of second type cells within the first type cell. Here, among the plurality of second type cells, a reception power value for the reference signal measured by a first cell may be highest.

Referring to FIG. 15, based on a reception power value measured by the first cell being equal to or greater than a threshold value and etc., a base station of the first cell may detect the UE, and the first cell may be activated for the UE.

The above [Proposal #07] may be applied in combination with other proposal(s) within a range in which operations of the disclosure do not conflict.

According to an embodiment of the present disclosure, the method proposed above may be applied to a device described below. First, a processor (202) of a receiving UE may configure at least one partial bandwidth (e.g., BWP). Then, the processor (202) of the receiving UE may control a transceiver (206) of the receiving UE to receive, from a transmitting UE, an inter-UE communication (e.g., SL communication)-related physical channel (e.g., PSCCH and/or PSSCH) and/or an inter-UE communication (e.g., SL communication)-related reference signal on the at least one partial bandwidth (e.g., BWP).

In the present disclosure, an unmanned aerial vehicle (e.g., UAV; unmanned aerial vehicle) may function as a UE, and communication technology may need to be applied for operations such as positioning and flight. In particular, since an unmanned aerial vehicle (e.g., UAV) may operate in the air, line of sight (LOS) with many base stations may be secured, and thus a method for determining from which base station the unmanned aerial vehicle (e.g., UAV) receives a service may need to be defined.

According to an embodiment of the present disclosure, a new type of cell (a first type cell) composed of a plurality of existing cells (second type cells) may be defined, and a device (e.g., an unmanned aerial vehicle) may determine a type of cell to access in consideration of capability and mobility of the device and may attempt a random access procedure to a cell of the determined type.

According to various embodiments of the present disclosure, in a situation in which there are many base stations that secure line of sight (LOS) with a device (e.g., an unmanned aerial vehicle), an effect related to complexity of UE implementation and a power saving effect may be achieved by reducing a frequency of handover of the device (e.g., the unmanned aerial vehicle).

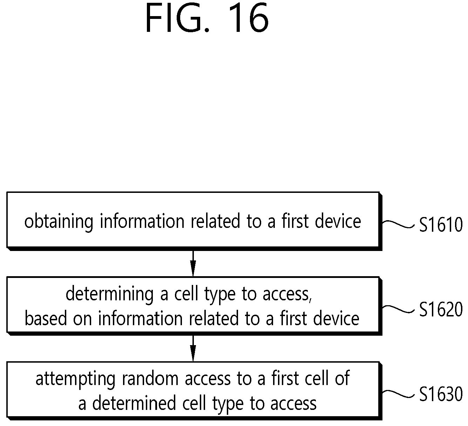

FIG. 16 shows a procedure that may be performed by a first device according to an embodiment of the present disclosure. The embodiment of FIG. 16 may be combined with various embodiments of the present disclosure.

Referring to FIG. 16, in step S1610, a first device may obtain information related to a first device. In step S1620, the first device may determine a cell type to access, based on the information related to the first device. For example, the cell type may include a first cell type and a second cell type, and a cell of the first cell type may be composed of a plurality of cells of the second cell type. In step S1630, the first device may attempt random access to a first cell of the determined cell type to access.

For example, the information related to the first device may be information for capability of the first device.

For example, the information related to the first device may be information for mobility of the first device.

For example, coverage of the cell of the first cell type may be wider than coverage of a cell of the second cell type.

For example, a synchronization signal may be used for the random access, and a type of the synchronization signal may be different according to the determined cell type to access.

For example, the synchronization signal may be a primary synchronization signal, based on the determined cell type to access being the first cell type, and the synchronization signal may be a secondary synchronization signal, based on the determined cell type to access being the second cell type.

For example, additionally, the first device may receive, from a base station, resource information for random access. For example, the resource information may include information for a first random access resource related to the first cell type and information for a second random access resource related to the second cell type.

For example, the random access may be attempted based on the resource information.

For example, the first random access resource may have a correspondence relationship with a synchronization signal resource.

For example, additionally, the first device may receive a synchronization signal; and obtain first identifier information related to the first cell type and second identifier information related to the second cell type based on the synchronization signal.

For example, a partial bandwidth related to the first cell type may be different from a partial bandwidth related to the second cell type.

For example, additionally, the first device may receive, from a base station related to the first cell, a first transmission configuration related to the first cell type and a second transmission configuration related to the second cell type.

For example, the method may be performed by the first device.

The above-described embodiment may be combined with various embodiments of the present disclosure. First, a processor 102 of a first device 100 may obtain information related to a first device 100. And, the processor 102 of the first device 100 may determine a cell type to access, based on the information related to the first device 100. For example, the cell type may include a first cell type and a second cell type, and a cell of the first cell type may be composed of a plurality of cells of the second cell type. And, the processor 102 of the first device 100 may attempt random access to a first cell of the determined cell type to access.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain information related to a first device; determine a cell type to access, based on the information related to the first device, wherein the cell type may include a first cell type and a second cell type, and wherein a cell of the first cell type may be composed of a plurality of cells of the second cell type; and attempt random access to a first cell of the determined cell type to access.

For example, the information related to the first device may include information for capability of the first device or information for mobility of the first device.

For example, additionally, the instructions may cause the first device to: receive, from a base station, information for a first service related to communication to be performed based on the cell of the first cell type and information for a second service related to communication to be performed based on a cell of the second cell type.

For example, a synchronization signal may be used for the random access, and a type of the synchronization signal may be different according to the determined cell type to acess.

For example, the synchronization signal may be a primary synchronization signal, based on the determined cell type to access being the first cell type, and the synchronization signal may be a secondary synchronization signal, based on the determined cell type to access being the second cell type.

For example, additionally, the instructions may cause the first device to: receive, from a base station, resource information for random access. For example, the resource information may include information for a first random access resource related to the first cell type and information for a second random access resource related to the second cell type.

For example, the random access may be attempted based on the resource information.

For example, the first random access resource may have a correspondence relationship with a synchronization signal resource.

For example, additionally, the instructions may cause the first device to: receive a synchronization signal; and obtain first identifier information related to the first cell type and second identifier information related to the second cell type based on the synchronization signal.

For example, a partial bandwidth related to the first cell type may be different from a partial bandwidth related to the second cell type.

For example, additionally, the instructions may cause the first device to: receive, from a base station related to the first cell, a first transmission configuration related to the first cell type and a second transmission configuration related to the second cell type.

For example, additionally, the instructions may cause the first device to: receive, from the base station, a trigger signal based on the first transmission configuration; perform a reference signal transmission or a control channel transmission whose destination is the cell of the first cell type, based on the reception of the trigger signal and the first transmission configuration; and perform a reference signal transmission or a control channel transmission whose destination is a cell of the second cell type, based on the reception of the trigger signal and the second transmission configuration.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: obtain information related to a first device; determine a cell type to access, based on the information related to the first device, wherein the cell type may include a first cell type and a second cell type, and wherein a cell of the first cell type may be composed of a plurality of cells of the second cell type; and attempt random access to a first cell of the determined cell type to access.

According to an embodiment of the present disclosure, a non-transitory computer-readable storage medium storing instructions may be proposed. For example, the instructions, based on being executed, may cause a first device to: obtain information related to a first device; determine a cell type to access, based on the information related to the first device, wherein the cell type may include a first cell type and a second cell type, and wherein a cell of the first cell type may be composed of a plurality of cells of the second cell type; and attempt random access to a first cell of the determined cell type to access.

According to an embodiment of the present disclosure, a base station may perform operations described below.

For example, a base station may transmit, to a first device, resource information for random access. For example, the resource information may include information for a first random access resource related to a first cell type and information for a second random access resource related to a second cell type, a cell of the first cell type may be composed of a plurality of cells of the second cell type, a cell type to which the first device attempts an access may be determined among the first cell type and the second cell type, based on information related to the first device, and random access may be attempted by the first device to a first cell of the determined cell type to which the first device attempts the access.

For example, the random access may be attempted based on the resource information and the first random access resource may have a correspondence relationship with a synchronization signal resource.

The above-described embodiment may be combined with various embodiments of the present disclosure. First, a processor 302 of a base station 300 may control a transceiver 306 to transmit, to a first device 100, resource information for random access. For example, the resource information may include information for a first random access resource related to a first cell type and information for a second random access resource related to a second cell type, a cell of the first cell type may be composed of a plurality of cells of the second cell type, a cell type to which the first device 100 attempts an access may be determined among the first cell type and the second cell type, based on information related to the first device 100, and random access may be attempted by the first device 100 to a first cell of the determined cell type to which the first device 100 attempts the access.

According to an embodiment of the present disclosure, a base station may be proposed. For example, the base station may comprise: at least one transceiver; at least one processor; and at least one memory connected to the at least one processor and storing instructions. For example, the instructions, based on being executed by the at least one processor, may cause the base station to: transmit, to a first device, resource information for random access, wherein the resource information may include information for a first random access resource related to a first cell type and information for a second random access resource related to a second cell type, wherein a cell of the first cell type may be composed of a plurality of cells of the second cell type, wherein a cell type to which the first device attempts an access may be determined among the first cell type and the second cell type, based on information related to the first device, and wherein random access may be attempted by the first device to a first cell of the determined cell type to which the first device attempts the access.

For example, the random access may be attempted based on the resource information and the first random access resource may have a correspondence relationship with a synchronization signal resource.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

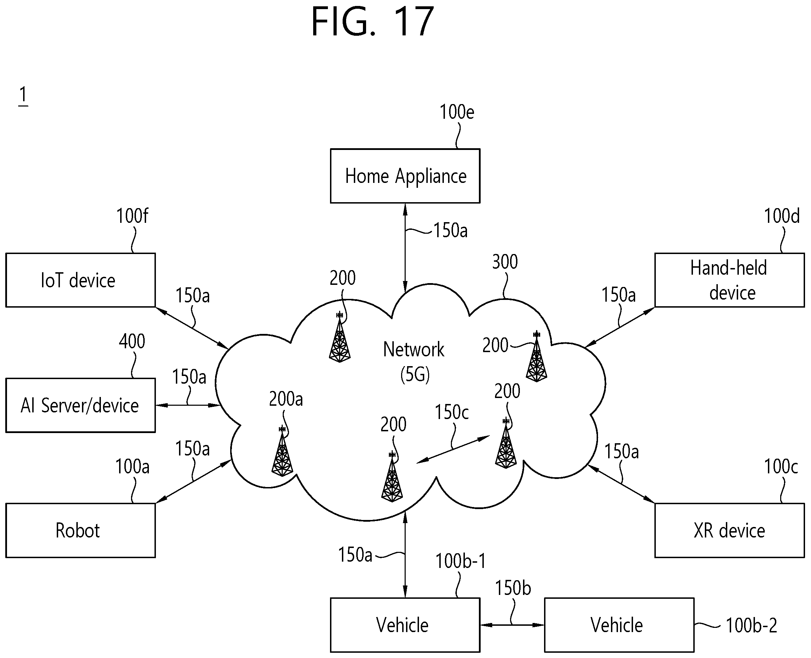

FIG. 17 shows a communication system 1, based on an embodiment of the present disclosure. The embodiment of FIG. 17 may be combined with various embodiments of the present disclosure.

Referring to FIG. 17, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

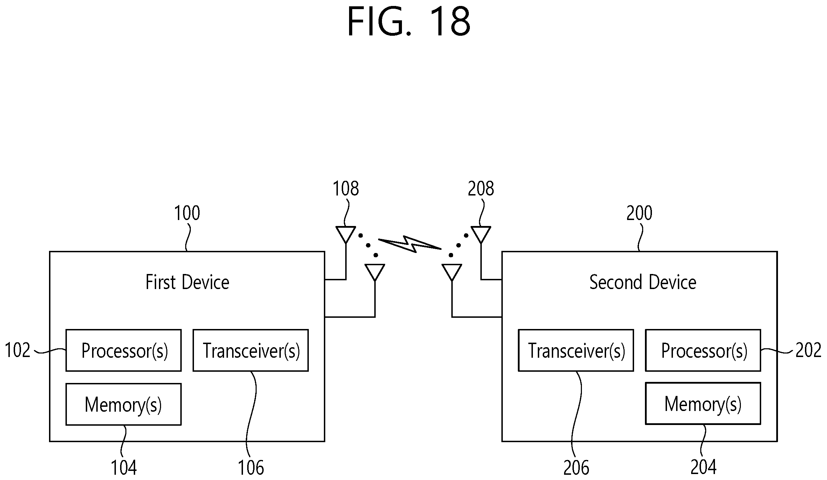

FIG. 18 shows wireless devices, based on an embodiment of the present disclosure. The embodiment of FIG. 18 may be combined with various embodiments of the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

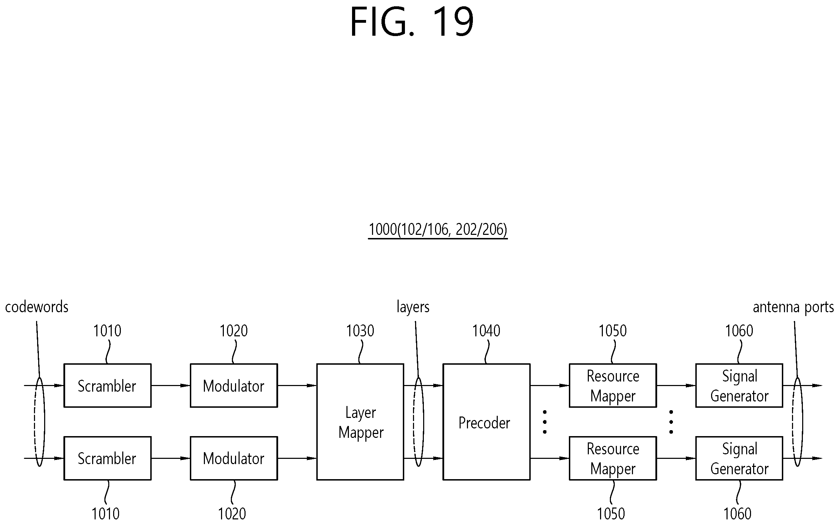

FIG. 19 shows a signal process circuit for a transmission signal, based on an embodiment of the present disclosure. The embodiment of FIG. 19 may be combined with various embodiments of the present disclosure.

Referring to FIG. 19, a signal processing circuit 1000 may include scramblers 1010, modulators 1020, a layer mapper 1030, a precoder 1040, resource mappers 1050, and signal generators 1060. An operation/function of FIG. 19 may be performed, without being limited to, the processors 102 and 202 and/or the transceivers 106 and 206 of FIG. 18. Hardware elements of FIG. 19 may be implemented by the processors 102 and 202 and/or the transceivers 106 and 206 of FIG. 18. For example, blocks 1010 to 1060 may be implemented by the processors 102 and 202 of FIG. 18. Alternatively, the blocks 1010 to 1050 may be implemented by the processors 102 and 202 of FIG. 18 and the block 1060 may be implemented by the transceivers 106 and 206 of FIG. 18.

Codewords may be converted into radio signals via the signal processing circuit 1000 of FIG. 19. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 19. For example, the wireless devices (e.g., 100 and 200 of FIG. 18) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

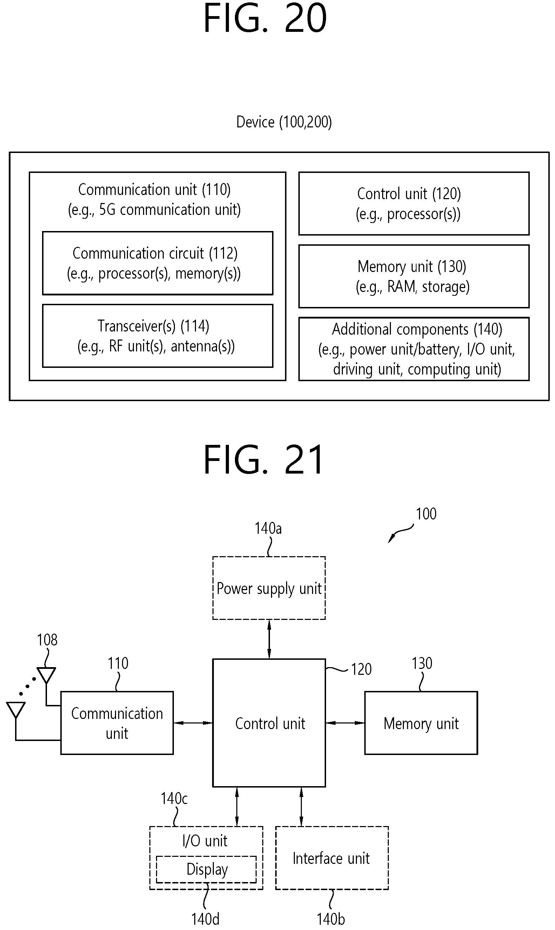

FIG. 20 shows another example of a wireless device, based on an embodiment of the present disclosure. The wireless device may be implemented in various forms according to a use-case/service (refer to FIG. 17). The embodiment of FIG. 20 may be combined with various embodiments of the present disclosure.

Referring to FIG. 20, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast terminal, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 20 will be described in detail with reference to the drawings.

FIG. 21 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 21 may be combined with various embodiments of the present disclosure.

Referring to FIG. 21, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 20, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

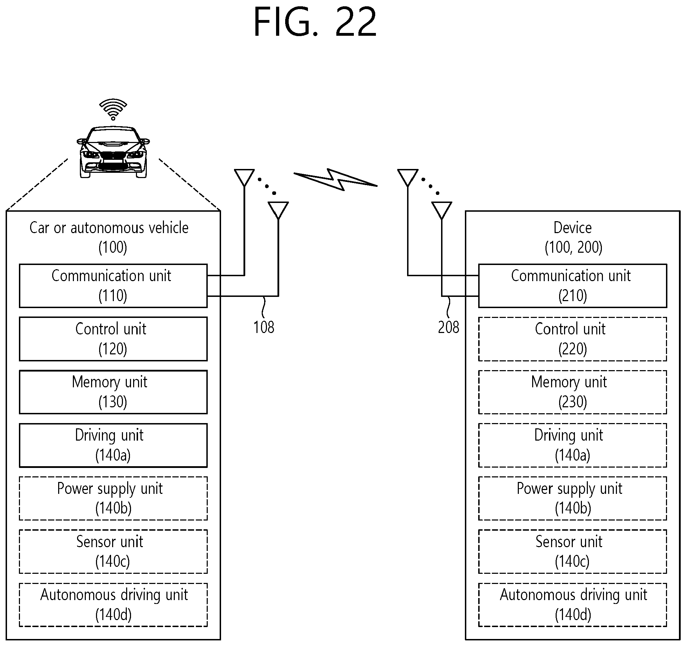

FIG. 22 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 22 may be combined with various embodiments of the present disclosure.

Referring to FIG. 22, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
obtaining information related to a first device;
determining a cell type to access, based on the information related to the first device,
wherein the cell type includes a first cell type and a second cell type, and
wherein a cell of the first cell type is composed of a plurality of cells of the second cell type; and
attempting random access to a first cell of the determined cell type to access.

2. The method of claim 1, wherein the information related to the first device is information for capability of the first device.

3. The method of claim 1, wherein the information related to the first device is information for mobility of the first device.

4. The method of claim 1, wherein coverage of the cell of the first cell type is wider than coverage of a cell of the second cell type.

5. The method of claim 1, wherein a synchronization signal is used for the random access, and
wherein a type of the synchronization signal is different according to the determined cell type to access.

6. The method of claim 5, wherein the synchronization signal is a primary synchronization signal, based on the determined cell type to access being the first cell type, and
wherein the synchronization signal is a secondary synchronization signal, based on the determined cell type to access being the second cell type.

7. The method of claim 1, further comprising:
receiving, from a base station, resource information for random access,
wherein the resource information includes information for a first random access resource related to the first cell type and information for a second random access resource related to the second cell type.

8. The method of claim 7, wherein the random access is attempted based on the resource information.

9. The method of claim 7, wherein the first random access resource has a correspondence relationship with a synchronization signal resource.

10. The method of claim 1, further comprising:
receiving a synchronization signal; and
obtaining first identifier information related to the first cell type and second identifier information related to the second cell type based on the synchronization signal.

11. The method of claim 1, wherein a partial bandwidth related to the first cell type is different from a partial bandwidth related to the second cell type.

12. The method of claim 1, further comprising:
receiving, from a base station related to the first cell, a first transmission configuration related to the first cell type and a second transmission configuration related to the second cell type.

13. The method of claim 1, wherein the method is performed by the first device.

14. A first device comprising:
at least one transceiver;
at least one processor; and
at least one memory connected to the at least one processor and storing instructions,
wherein the instructions, based on being executed by the at least one processor, cause the first device to:
obtain information related to a first device;
determine a cell type to access, based on the information related to the first device,
wherein the cell type includes a first cell type and a second cell type, and
wherein a cell of the first cell type is composed of a plurality of cells of the second cell type; and
attempt random access to a first cell of the determined cell type to access.

15. A processing device adapted to control a first device comprising:
at least one processor; and
at least one memory connected to the at least one processor and storing instructions,
wherein the instructions, based on being executed by the at least one processor, cause the first device to:
obtain information related to a first device;
determine a cell type to access, based on the information related to the first device,
wherein the cell type includes a first cell type and a second cell type, and
wherein a cell of the first cell type is composed of a plurality of cells of the second cell type; and
attempt random access to a first cell of the determined cell type to access.

16. A non-transitory computer-readable storage medium storing instructions that, based on being executed, cause a first device to:
obtain information related to a first device;
determine a cell type to access, based on the information related to the first device,
wherein the cell type includes a first cell type and a second cell type, and
wherein a cell of the first cell type is composed of a plurality of cells of the second cell type; and
attempt random access to a first cell of the determined cell type to access.

17. A method comprising:
transmitting, to a first device, resource information for random access,
wherein the resource information includes information for a first random access resource related to a first cell type and information for a second random access resource related to a second cell type,
wherein a cell of the first cell type is composed of a plurality of cells of the second cell type,
wherein a cell type to which the first device attempts an access is determined among the first cell type and the second cell type, based on information related to the first device, and
wherein random access is attempted by the first device to a first cell of the determined cell type to which the first device attempts the access.

18. The method of claim 17, wherein the random access is attempted based on the resource information and
wherein the first random access resource has a correspondence relationship with a synchronization signal resource.

19. A base station comprising:
at least one transceiver;
at least one processor; and
at least one memory connected to the at least one processor and storing instructions,
wherein the instructions, based on being executed by the at least one processor, cause the base station to:
transmit, to a first device, resource information for random access,
wherein the resource information includes information for a first random access resource related to a first cell type and information for a second random access resource related to a second cell type,
wherein a cell of the first cell type is composed of a plurality of cells of the second cell type,
wherein a cell type to which the first device attempts an access is determined among the first cell type and the second cell type, based on information related to the first device, and
wherein random access is attempted by the first device to a first cell of the determined cell type to which the first device attempts the access.

20. The base station of claim 19, wherein the random access is attempted based on the resource information and
wherein the first random access resource has a correspondence relationship with a synchronization signal resource.
